# EUROPÄISCHE PATENTSCHRIFT

(11) **EP 3 782 218 B1**
(45) Veröffentlichungstag und Bekanntmachung des Hinweises auf die Patenterteilung: **07.07.2021**
(21) Anmeldenummer: 19709431.1
(22) Anmeldetag: 04.03.2019
(51) Int. Cl.: H01M 8/2485

(54) **BRENNSTOFFZELLENVORRICHTUNG**
FUEL CELL DEVICE
DISPOSITIF DE PILE À COMBUSTIBLE

(30) Priorität: 07.06.2018 DE 102018208981
(43) Veröffentlichungstag der Anmeldung: 24.02.2021
(73) Patentinhaber: Audi AG, 85045 Ingolstadt (DE)
(72) Erfinder: GRETZER, Markus, 85072 Eichstätt (DE); KLUY, Norbert, 85132 Schönfeld (DE)
(86) Internationale Anmeldenummer: PCT/EP2019/055296
(87) Internationale Veröffentlichungsnummer: WO 2019/233637

(56) Entgegenhaltungen:
- JP-A- H06 251 793
- JP-A- 2014 191 879
- US-A1- 2005 014 058

## Beschreibung

Die Erfindung betrifft eine Brennstoffzellenvorrichtung mit einem Brennstoffzellenstapel, der aus einer Mehrzahl von in einer Stapelrichtung übereinandergestapelten Einheitszellen ("unit cell") gebildet ist. Jede der Einheitszellen weist einen oder mehrere Medienkanäle und eine Membranelektrodenanordnung (MEA) auf. Die Membranelektrodenanordnung umfasst eine Kathode, eine Anode und eine zwischen der Kathode und der Anode angeordnete Membran. Eine Medienführung verläuft im Wesentlichen parallel zur Stapelrichtung und ist derart mit dem Brennstoffzellenstapel verbindbar oder verbunden, um ein Medium im Wesentlichen lateral zur Stapelrichtung in die oder aus den Medienkanälen der Einheitszelle des Brennstoffzellenstapels zu führen. Die Medienführung umfasst dabei zumindest mittelbar miteinander verbundene Führungsschenkel, welche mit dem Brennstoffzellenstapel verbindbar oder verbunden sind.

Bekannte Brennstoffzellenvorrichtungen besitzen Kanäle, die innerhalb des Brennstoffzellenstapels entlang der Stapelrichtung ausgebildet sind. Um zu gewährleisten, dass die Reaktionsmedien sich nicht durchmischen, ist eine aufwändige Dichtungsstruktur von Nöten. Beim Betrieb des Brennstoffzellenstapels ist außerdem sicherzustellen, dass die Medien nicht nach außen an die Umwelt gelangen. In DE 10 2005 038 931 A1 ist ein Brennstoffzellenstapel gezeigt, der mehrere seitlich an diesen angebrachte U-förmige Medienzuführungen aufweist.

Eine Brennstoffzellenvorrichtung gemäß dem Oberbegriff des Anspruchs 1 ist aus einer nicht vorveröffentlichten Anmeldung der Anmelderin bekannt.

Dabei sind die Führungsschenkel mit dem Brennstoffzellenstapel stoffschlüssig verbunden, womit also mit anderen Worten die Medienführung mit dem Brennstoffzellenstapel verklebt ist.

Aus der JP H06 251793 A ist eine Brennstoffzellenvorrichtung bekannt, die eine Hülse umfasst, die über den Brennstoffzellenstapel gestülpt wird und diesen umgibt, um diesem lateral Medien zuführen zu können. Dabei werden fluiddichte Stäbe mit Spiel in Ausnehmungen eingesetzt, die in Stapellängsrichtung einerseits in der Hülse und andererseits im Brennstoffzellenstapel ausgebildet sind.

Es ist die Aufgabe der vorliegenden Erfindung, eine Brennstoffzellenvorrichtung bereitzustellen, die eine vereinfachte Medienzufuhr zum Brennstoffzellenstapel erlaubt und eine vereinfachte und sichere Kopplung zwischen der Medienführung und dem Brennstoffzellenstapel bietet.

Diese Aufgabe wird durch eine Brennstoffzellenvorrichtung mit dem Merkmalsbestand des Anspruchs 1 gelöst. Vorteilhafte Ausgestaltungen mit zweckmäßigen Weiterbildungen der Erfindung sind in den abhängigen Ansprüchen angegeben.

Insbesondere sind dabei die Führungsschenkel der Medienführung in im Wesentlichen parallel zur Stapelrichtung verlaufenden Schenkelaufnahmen des Brennstoffzellenstapels eingesetzt.

Damit können also die Führungsschenkel der Medienführungen seitlich am Brennstoffzellenstapel mit einem vorgegebenen Anschlag am Brennstoffzellenstapel positioniert werden. Dies reduziert den Aufwand, die Medienführungen an der richtigen Stelle zu montieren. Zudem ist die Montagezeit für die Montage der Medienführungen aufgrund der am Brennstoffzellenstapel ausgebildeten Schenkelaufnahmen minimiert.

Eine derartige Anordnung ist zudem vorteilhaft, da für die Medienführung ein anderes Material gewählt werden kann als für die Einheitszellen bzw. für die Bipolarplatten der Einheitszellen. Außerdem lässt sich die Anzahl der Dichtungsspuren reduzieren, die für eine Abdichtung der Medienführungen hergestellt werden müssen. Dadurch ist auch die Fertigungskomplexität reduziert.

Es hat sich als sinnvoll herausgestellt, wenn die Schenkelaufnahmen des Brennstoffzellenstapels als im Wesentlichen parallel zur Stapelrichtung verlaufenden Nuten gebildet sind. Derartige Nuten sind fertigungstechnisch sehr einfach herzustellen.

Erfindungsgemäße ist vorgesehen, dass die Medienführung elastisch nachgiebig gebildet ist, derart, dass die Führungsschenkel unter einer Vorspannung in den Schenkelaufnahmen gehalten sind. Durch eine solche Vorspannung können die Medienführungen selbstsichernd während der Montage am Brennstoffzellenstapel fixiert werden, wobei vorzugsweise zusätzlich eine stoffschlüssige Verbindung der Führungsschenkel mit dem Brennstoffzellenstapel, insbesondere mit dessen Schenkelaufnahmen ausgebildet werden kann, um eine feste Verbindung herzustellen.

Vorzugsweise ist die Rückstellkraft nach außen gerichtet, denn der durch das Medium erzeugte Druck bewirkt ebenfalls eine nach außen gerichtete Kraft auf die Führungsschenkel. Aufgrund der Summenbildung der Kraft des strömenden Mediums und der durch die Elastizität gegebene Rückstellkraft wird eine noch festere und noch damit sicherere Anbindung der Medienführung an dem Brennstoffzellenstapel erzielt.

Eine zusätzliche Sicherung der Führungsschenkel innerhalb der Schenkelaufnahmen lässt sich dadurch erreichen, dass die Schenkelaufnahmen eine, vorzugsweise im Wesentlichen parallel zur Stapelrichtung verlaufende, Hinterschneidung aufweisen, die derart ausgebildet ist, dass darin ein an dem einen und/oder an dem anderen Führungsschenkel ausgebildetes oder angeordnetes Führungsglied aufnehmbar ist.

Um die Fixierung der Führungsschenkel zusätzlich zu stärken, hat es sich als vorteilhaft erwiesen, wenn das Führungsglied formschlüssig in der Hinterschneidung aufnehmbar ist.

In diesem Zusammenhang kann es auch sinnvoll sein, wenn das Führungsglied aus einem anderen Material als die Führungsschenkel gebildet ist. Beispielsweise kann das Führungsglied aus einem Material mit adhäsiven Eigenschaften gebildet sein, so dass - gegebenenfalls neben einem Formschluss - zusätzlich ein Verkleben des Führungsglieds innerhalb der Hinterschneidung erfolgt und somit zusätzlich eine stoffschlüssige Verbindung ausgebildet ist.

Aufgrund des in der Medienführung bzw. in dem Brennstoffzellenstapels herrschenden Drucks durch das darin geführte Medium sieht sich die Verbindung der Medienführung mit dem Brennstoffzellenstapel vor einer Herausforderung hinsichtlich der Aufrechterhaltung einer Dichtheit. Um diesem Erfordernis gerecht zu werden, hat es sich deshalb als sinnvoll erwiesen, wenn das Führungsglied außerdem aus einem Dichtungsmaterial gebildet ist.

In einer Ausgestaltung der Medienführung sind die Führungsschenkel mittelbar über einen Führungssteg miteinander verbunden. Damit lässt sich eine U-Form beschreiben, wobei das offene Ende des "U" zum Brennstoffzellenstapel zeigt und damit die Medien von außen an den Brennstoffzellenstapel herangeführt werden. Die Medien strömen also innerhalb der Medienführungen im Wesentlichen parallel zur Stapelrichtung. In den Brennstoffzellenstapel gelangen sie in einer lateralen oder seitlichen Richtung (x-y-Richtung) bezüglich der Stapelrichtung (z-Richtung).

Alternativ können die Führungsschenkel auch unmittelbar miteinander verbunden sein, so dass eher eine im Querschnitt C-förmige Gestaltung der Medienführungen mit einem offenen Ende des "C" zum Brennstoffzellenstapel realisiert ist. Auch hier strömen die Medien innerhalb der Medienführungen im Wesentlichen parallel zur Stapelrichtung und gelangen in einer lateralen oder seitlichen Richtung bezüglich der Stapelrichtung in den Brennstoffzellenstapel.

Eine einfach herzustellende Brennstoffzellenvorrichtung ist außerdem dadurch gekennzeichnet, dass mehrere Medienführungen vorgesehen sind. Diese untergliedern sich vorzugsweise in eine erste Medienzuführung zur Zuführung eines ersten Reaktionsmediums und eine erste Medienabführung zur Abführung des zumindest teilverbrauchten ersten Reaktionsmediums. Weiterhin untergliedern sich die mehreren Medienführungen in eine zweite Medienzuführung zur Zuführung eines zweiten Reaktionsmediums und eine zweite Medienabführung zur Abführung des zumindest teilverbrauchten zweiten Reaktionsmediums. Somit sind also die beiden Reaktionsmedien seitlich entlang des Brennstoffzellenstapels, d.h. stapelextern, in den Medienführungen geführt, wobei sie senkrecht zur Stapelrichtung, mithin lateral in die Einheitszellen des Brennstoffzellenstapels eintreten können bzw. oder aus diesen austreten können.

Um zusätzlich ein Kühlmittel stapelextern entlang des Brennstoffzellenstapels zu führen, und um das Kühlmittel lateral in die Einheitszellen oder zwischen zwei Einheitszellen in den Brennstoffzellenstapel zu führen, hat es sich als sinnvoll erwiesen, wenn sich die Medienführungen außerdem in eine Kühlmittelzuführung und eine Kühlmittelabführung untergliedern.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1a: eine Brennstoffzellenvorrichtung in einer Perspektivansicht,
- Fig. 1b: eine weitere Brennstoffzellenvorrichtung in einer Perspektivansicht,
- Fig. 2: eine (erste) Bipolarplatte einer Einheitszelle in einer Draufsicht,
- Fig. 3: den Schnitt III-III aus Figur 2,
- Fig. 4: die (erste) Bipolarplatte aus Figur 2 mit aufgebrachter Verbundschicht, in einer Draufsicht gezeigt,
- Fig. 5: den Schnitt V-V aus Figur 4 (unverpresster Zustand),
- Fig. 6: die (erste) Bipolarplatte aus Figur 4 mit einer darauf aufgelegten Brennstoffzellenanordnung,
- Fig. 7: den Schnitt VII-VII aus Figur 6 (unverpresster Zustand),
- Fig. 8: die Konfiguration aus Figur 6 mit einer aufgebrachten Verbindungsschicht,
- Fig. 9: den Schnitt IX-IX aus Figur 8 (unverpresster Zustand),
- Fig. 10: eine Einheitszelle des Brennstoffzellenstapels mit einer (zweiten) Bipolarplatte, in einer Draufsicht gezeigt,
- Fig. 11: die (zweite) Bipolarplatte in einer Unteransicht, d.h. in einer Ansicht auf die der Membranelektrodenanordnung zugewandten Fläche der zweiten Bipolarplatte,
- Fig. 12: ein aus mehreren Einheitszellen entsprechend Figur 10 gebildeter Brennstoffstoffzellenstapel in einer Perspektivansicht,
- Fig. 13: die Schnittansicht XIII-XIII aus Figur 10 durch eine Mehrzahl an übereinander gestapelten Einheitszellen (verpresster Zustand),
- Fig. 14: die Schnittansicht XIV-XIV aus Figur 10 durch eine Mehrzahl an übereinander gestapelten Einheitszellen (verpresster Zustand),
- Fig. 15: einen senkrecht zur Stapelrichtung verlaufenden Querschnitt durch den Brennstoffzellenstapel aus Figur 1a mit daran angebrachten Medienführungen,
- Fig. 16: einen senkrecht zur Stapelrichtung verlaufenden Querschnitt durch die Brennstoffzellenvorrichtung aus Figur 1b,
- Fig. 17: eine perspektivische Detailansicht der Brennstoffzellenvorrichtung nach Fig. 1b,
- Fig. 18: eine Detailansicht auf die Schenkelaufnahme und das Ende eines Führungsschenkel, und
- Fig. 19: eine weitere Detailansicht auf die Schenkelaufnahme mit darin eingesetzten Führungsschenkel.

Es sei vorab darauf hingewiesen, dass die Dimensionen, die Größenverhältnisse und der Maßstab der gezeigten Darstellungen nicht festgelegt sind und variieren können. Insbesondere bei den Schnittdarstellungen sind die einzelnen Schichten so dargestellt, dass nachvollziehbar ist, in welcher gegenseitigen Lage und in welcher Reihenfolge die Einzelschichten aufeinander gestapelt sind.

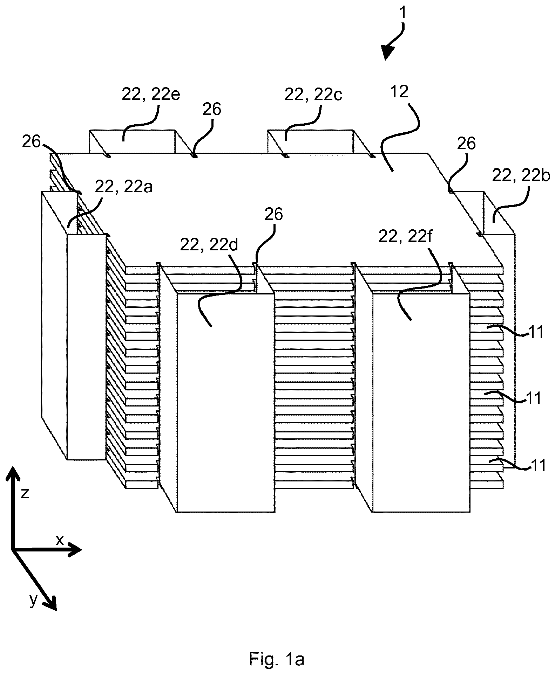

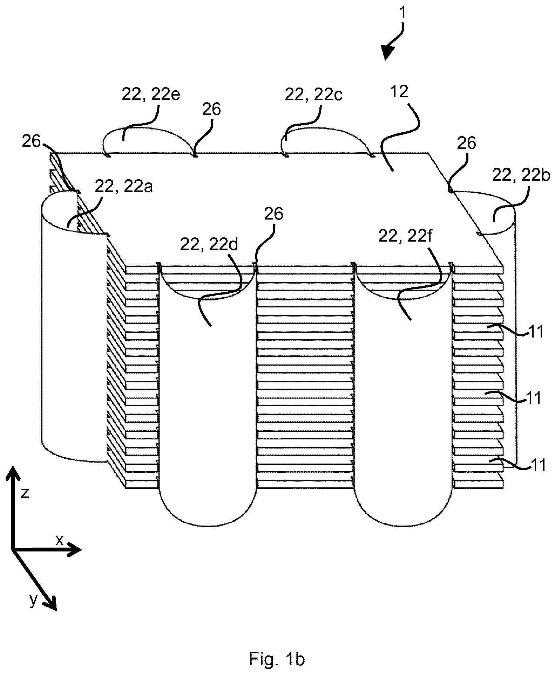

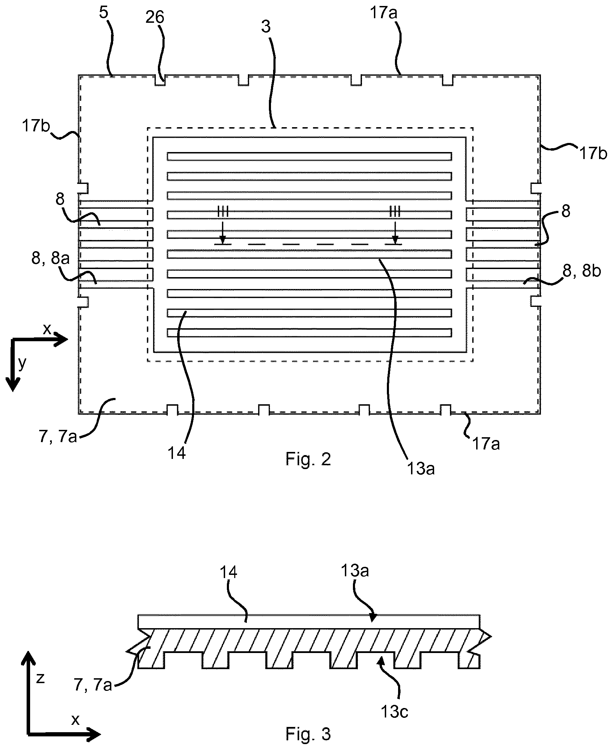

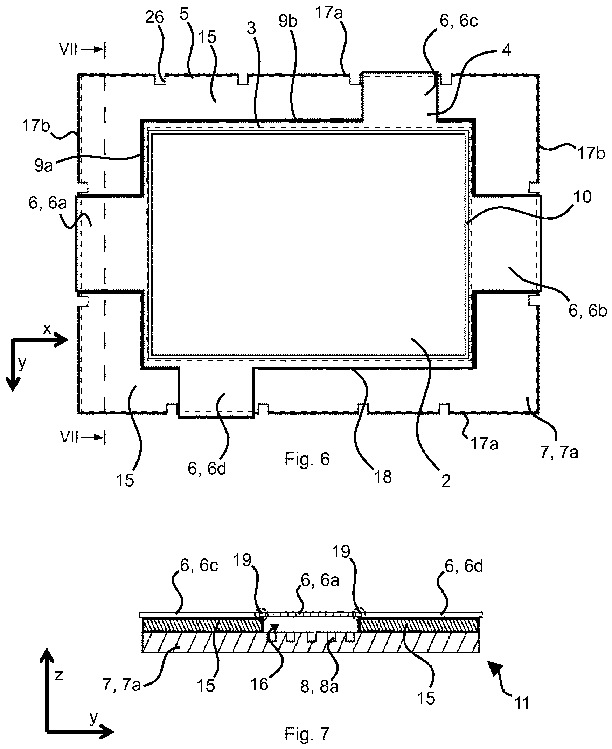

In den Figuren 1a und 1b sind jeweils eine Brennstoffzellenvorrichtung 1 mit einem Brennstoffzellenstapel 12 gezeigt. Der Brennstoffzellenstapel 12 ist aus einer Mehrzahl an in einer Stapelrichtung (z-Richtung) übereinander gestapelten Einheitszellen 11 gebildet ist. Die Einheitszellen 11 weisen jeweils einen oder mehrere Medienkanäle 8 (Fig. 2) und eine Membranelektrodenanordnung 2 (Fig. 6) auf. Jede der Membranelektrodenanordnungen 2 in den Einheitszellen 11 umfasst eine Kathode, eine Anode und eine zwischen der Kathode und der Anode angeordnete ionenleitfähige Membran.

Die Brennstoffzellenvorrichtung 1 weist außerdem parallel zur Stapelrichtung verlaufende Medienführungen 22 auf, die derart mit dem Brennstoffzellenstapel 12 verbunden sind, um ein Medium im Wesentlichen lateral zur Stapelrichtung in die oder aus den Medienkanälen 8 der Einheitszellen 11 des Brennstoffzellenstapels 12 zu führen. Die vorliegende Brennstoffzellenvorrichtung 1 umfasst hierfür mehrere Medienführungen 22, die sich in eine erste Medienzuführung 22a zur Zuführung eines ersten Reaktionsmediums (z.B. Wasserstoff) an die Anoden und in eine erste Medienabführung 22b zur Abführung des in den Einheitszellen 11 nicht-verbrauchten ersten Reaktionsmediums untergliedern. Außerdem untergliedern sich die Medienführungen 22 in eine zweite Medienzuführung 22c zur Zuführung eines zweiten Reaktionsmediums (z.B. Sauerstoff oder Luft) an die Kathoden und in eine zweite Medienabführung 22d zur Abführung des in den Einheitszellen 11 nicht-verbrauchten zweiten Reaktionsmediums. Letztlich untergliedern sich die Medienführungen zudem in eine Kühlmittelzuführung 22e zur Zuführung eines Kühlmittels (z.B. flüssiges Wasser) und in eine Kühlmittelabführung 22f zur Abführung von (teil-)erwärmten Kühlmittel.

Beispielhaft wird nachstehend die Herstellung bzw. der Aufbau der gezeigten Einheitszellen 11 des Brennstoffzellenstapels 12 anhand der Figuren 2 bis 11 erläutert.

In Figur 2 ist eine Bipolarplatte 7 von einer der Einheitszellen 11 gezeigt. Diese erste Bipolarplatte 7a weist einen inneren, gestrichelt dargestellten aktiven Bereich 3 und einen äußeren, gestrichelt dargestellten Randbereich 5 auf. Im Randbereich 5 sind mehrere Medienkanäle 8 ausgebildet, die sich in die in der Zeichnung links dargestellten ersten Medieneintrittskanäle 8a und die in der Zeichnung rechts dargestellten ersten Medienaustrittskanäle 8b untergliedern lassen. Die Medienkanäle 8 umgebend ist vorliegend jeweils ein Paar an Schenkelaufnahmen 26 ausgebildet, auf die unten näher eingegangen wird. Weitere Schenkelaufnahmen 26 sind an den langen Kanten 17a der Bipolarplatte 7 ausgebildet.

Vorliegend sind fünf der ersten Medieneintrittskanäle 8a und fünf der ersten Medienaustrittskanäle 8b in der ersten Bipolarplatte 7a ausgebildet. Eine andere Anzahl ist möglich. Die ersten Medieneintrittskanäle 8a sind mit den ersten Medienaustrittskanälen 8b über ein erstes Flussfeld 13a miteinander strömungsverbunden. Dieses Flussfeld 13a befindet sich im aktiven Bereich 3 und kann einer benachbarten Membranelektrodenanordnung 2 ein Reaktionsmedium zur Verfügung stellen. Im Beispiel nach Figur 2 weist das Flussfeld 13a mehrere Führungen oder Wände 14 auf zur gleichmäßigen Verteilung eines Reaktionsmediums über die Oberfläche der Membranelektrodenanordnung 2. Es ist allerdings auch möglich, andersartige Flussfelder 13a einzusetzen, zum Beispiel solche, bei denen die Strömung des Reaktionsmediums mäanderförmig über den Bereich der aktiven Fläche geführt ist. Außerdem kann auch der Abstand der Wände 14, der Wandungen oder der Stege variieren. Auch die Tiefe des durch benachbarte Wände 14 gebildeten Kanals kann unterschiedlich tief ausgeführt sein und variieren.

Wie sich aus Figur 3, dem Schnitt III-III aus Figur 2 ergibt, ist auch auf der der Membranelektrodenanordnung 2 abgewandten Seite der ersten Bipolarplatte 7a ein Flussfeld 13c ausgebildet, das dem Durchströmen eines anderen Mediums, zum Beispiel eines Kühlmittels dient.

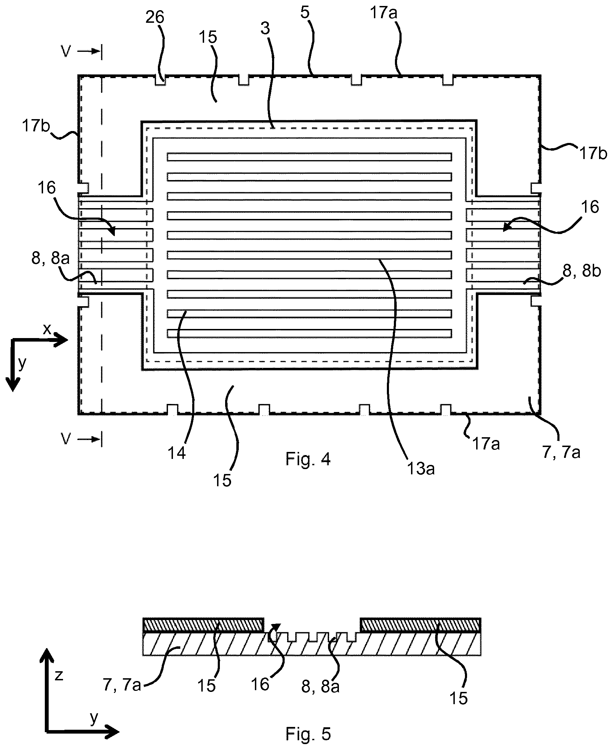

Wie Figur 4 zeigt, wird auf die erste Bipolarplatte 7a im Randbereich 5 eine Verbundschicht 15, insbesondere eine Fügeschicht aufgetragen. Diese Verbundschicht 15 ist mehrteilig gebildet bzw. weist im Bereich der Medienkanäle 8a, 8b Aussparungen 16 auf. Die Aussparungen 16 gewährleisten, dass die Medieneintrittskanäle 8a und die Medienaustrittskanäle 8b nicht abgedichtet sind und später eine Durchführung von Medien zulassen.

Die im Randbereich 5 angebrachte Verbundschicht 15 erstreckt sich entlang der langen Kante 17a der ersten Bipolarplatte 7a, so dass ein bündiger Abschluss mit dem durch die Abmessungen der Bipolarplatte 7 vorgegebenen Randbereich 5 entsteht. Auch an der Verbundschicht 15 bleiben Bereiche für die Schenkelaufnahmen 26 frei. Durch diese Verbundschicht 15 wird die aktive Fläche bzw. der aktive Bereich 3 gegenüber der Umwelt abgedichtet, wobei die Wahl des Materials der Verbundschicht 15 so zu treffen ist, dass diese Dichtfunktion gewährleistet ist. In Figur 5, dem Schnitt V-V aus Figur 4 ist der bündige Abschluss der Verbundschicht 15 bzw. des Fügematerials mit der Bipolarplatte 7 entlang ihren langen Kanten 17a zu erkennen. Auch die Abschnitte der Verbundschicht 15, die sich an den kurzen Kanten 17b befinden, schließen vorzugsweise bündig mit der Bipolarplatte 7 ab. Die gewählte Darstellung der Verbundschicht 15 ist exemplarisch. Sie kann sehr viel dünner als die erste Bipolarplatte 7a ausgestaltet sein.

Bei Figur 6 wurde eine Brennstoffzellenanordnung mit einer Membranelektrodenanordnung 2 auf die mit der Verbundschicht 15 bedeckte erste Bipolarplatte 7a nach Figur 4 aufgebracht oder aufgelegt. Im Wesentlichen wird der aktive Bereich 3 durch die Abmessungen der Membranelektrodenanordnung 2 vorgegeben, welcher in der Figur wiederum durch die innere gestrichelte Linie skizziert ist. Der aktive Bereich 3 erstreckt sich aber nicht nur in einer Ebene (x-y-Ebene) sondern auch in der Stapelrichtung (z-Richtung), die aus der Papierebene heraus- oder hineingerichtet ist.

Der aktive Bereich 3 ist derjenige Bereich, in welchem die elektrochemische Reaktion der durch die Membranelektrodenanordnung 2 gebildeten Brennstoffzelle erfolgt. Bei der elektrochemischen Reaktion wird ein Brennstoff (z.B. Wasserstoff) an die Anode geführt, wo er katalytisch unter Abgabe von Elektronen zu Protonen oxidiert wird. Diese Protonen werden durch die lonen-Austausch-Membran zur Kathode transportiert. Die aus der Brennstoffzelle abgeleiteten Elektronen fließen über einen elektrischen Verbraucher, vorzugsweise zu einem Elektromotor zum Antrieb eines Fahrzeugs oder zu einer Batterie. Anschließend werden die Elektronen zur Kathode geführt. An der Kathode wird das Oxidationsmedium (z.B. Sauerstoff oder Sauerstoff enthaltende Luft) durch die Aufnahme der Elektronen zu Anionen reduziert, die unmittelbar mit den Protonen zu Wasser reagieren.

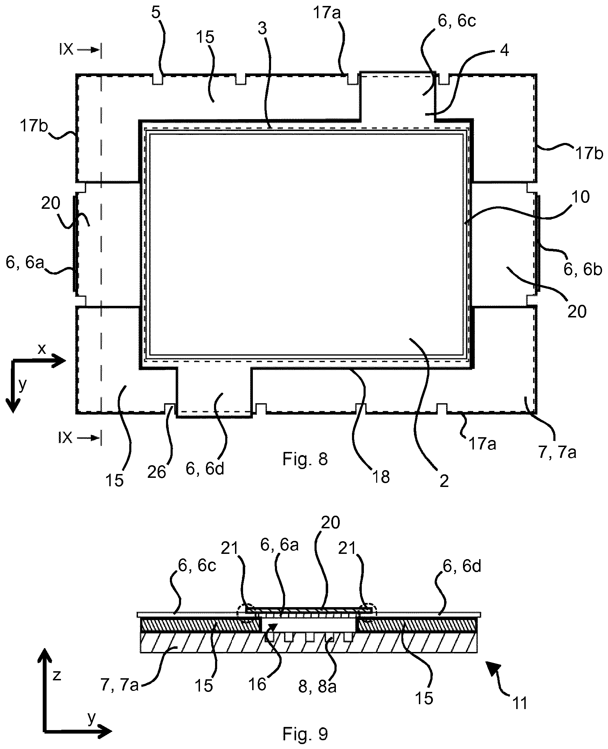

Um zu gewährleisten, dass der Brennstoff unmittelbar an die Anode gelangt, oder dass das Oxidationsmedium unmittelbar zur Kathode gelangt, ist der Membranelektrodenanordnung 2 eine Dichtungsstruktur 4 lateral zugeordnet (Fig. 6, 8). Die Kombination aus der Membranelektrodenanordnung 2 und der Dichtungsstruktur 4 bildet dabei eine gemeinsame Brennstoffzellenanordnung. Die Dichtungsstruktur 4 umfasst dabei Bestandteile, die sich in den Randbereich 5 erstrecken oder sogar über den Randbereich 5 hinausragen. Diese Bestandteile sind damit also außerhalb des aktiven Bereichs 3 angeordnet. Mit anderen Worten begrenzt der Randbereich 5 den aktiven Bereich 3 in radialer oder lateraler Richtung bzw. umfangsseitig.

Es ist in den Figuren 6 und 8 zu erkennen, dass die Dichtungsstruktur 4 eine sich in den oder über den Randbereich 5 erstreckende Dichtungszunge 6 zur axialen gasdichten Abdeckung eines in einer benachbarten Bipolarplatte 7 ausgebildeten und im Randbereich 5 befindlichen Medienkanals 8 umfasst. Die hier gezeigte Brennstoffzellenanordnung weist insgesamt vier Dichtungszungen 6 auf. Zwei der Dichtungszungen 6 sind an der kürzeren Kante 9a der Membranelektrodenanordnung 2 sich gegenüberliegend angeordnet. Die anderen beiden Dichtungszungen 6 sind an der langen Kante 9b der Membranelektrodenanordnung 2 sich gegenüberliegend und versetzt zueinander angeordnet. Die Dichtungszungen 6 weisen vorliegend alle eine rechteckige Form auf. Mehreckige Formen der Dichtungszungen sind aber möglich, wobei auch abgerundete Dichtungszungen 6 in Betracht kommen.

Die Dichtungsstruktur 4 und insbesondere die Dichtungszungen 6 sind formstabil gebildet hinsichtlich einer auf diese axial einwirkenden Druck-und/oder Zugbeanspruchung. Weiterhin ist zu erkennen, dass sich die Dichtungszungen 6 über den Randbereich 5 hinaus erstrecken. Es ist allerdings auch möglich, dass eine oder mehrere der Dichtungszungen 6 sich lediglich in den Randbereich 5 hinein erstrecken, ihn aber nicht vollständig bedecken oder seitlich über ihn hinausstehen.

Weiterhin ist zu erkennen, dass die Dichtungsstruktur 4 einen die Membranelektrodenanordnung 2 lateral abdichtenden Dichtungsrand 10 aufweist. Die durch den Dichtungsrand 10 gebildete Dichtungslinie dichtet die Membranelektrodenanordnung 2 gegen den seitlichen Austritt von Medien ab.

Die Dichtungszunge 6 der Brennstoffzellenanordnung an der linken Seite deckt dabei die linken Medienkanäle 8 der ersten Bipolarplatte 7a axial gasdicht ab. Die rechte Dichtungszunge 6 der Brennstoffzellenanordnung deckt die rechten Medienkanäle 8 der ersten Bipolarplatte 7a axial gasdicht ab. Mit anderen Worten ist also die linke Dichtungszunge 6 als eine erste Eintrittsdichtungszunge 6a zur axialen gasdichten Abdeckung des ersten Medieneintrittskanals 8a links gebildet. Dementsprechend ist die rechte Dichtungszunge 6 als eine erste Austrittsdichtungszunge 6b zur axialen gasdichten Abdeckung des rechten ersten Medienaustrittskanal 8b geformt. Die an der langen Kante 17a der Bipolarplatte 7a vorgesehenen Dichtungszungen 6 liegen auf der Verbundschicht 15 auf. Sie lassen sich untergliedern in eine zweite Eintrittsdichtungszunge 6c und eine zweite Austrittsdichtungszunge 6d.

Als Material der Verbundschicht 15 kann ein Kunststoff oder eine Kunststoffmischung Verwendung finden, die vorzugsweise eine geringere thermische Stabilität gegenüber dem Kunststoff oder Kunststoffmischung der Dichtungsstruktur 4 bzw. der Dichtungszungen 6 aufweist. Somit können also die Dichtungszungen 6 bei einem (Heiß-)Pressvorgang in die Verbundschicht 15 einsinken und vorzugsweise mit dieser verschmelzen, wobei die Dichtungszungen 6 ihre Formstabilität bewahren. Mit anderen Worten liegt der Schmelzpunkt des Materials der Dichtungsstruktur 4 oberhalb des Schmelzpunktes des Materials der Verbundschicht 15.

Im zentralen Bereich, also dort, wo sich der aktive Bereich 3 befindet, ist die Dichtungsstruktur 4 der Brennstoffzellenanordnung hinsichtlich ihrer Außenkontur angepasst an die durch die Verbundschicht 15 vorgegebene Innenkontur. Dabei bilden die dichtungszungenfreien Abschnitte der Dichtungsstruktur 4 Kontaktpunkte, Kontaktlinien 18 oder Kontaktflächen mit der Verbundschicht 15 aus, so dass eine Dichtfunktion zusätzlich gewährleistet ist.

Figur 7, der Schnitt VII-VII aus Figur 6, zeigt eine unverpresste Schnittdarstellung der teilweisen Einheitszelle 11. Es ist zu erkennen, dass die ersten Dichtungszungen 6a, 6b die Verbundschicht 15 überragen und Überstände 19 mit dieser ausbilden. Hierbei ist die nötige Abdichtung in seitlicher Richtung gewährleistet. Auch hier ist die gewählte Darstellung nicht maßstabsgetreu zu verstehen. Die Dicken der einzelnen Schichten können variieren, insbesondere nach einem Verbindungsvorgang oder Fügevorgang (Heißpressvorgang), nach welchem sie wie eine einzige gemeinsame Schicht anmuten oder wirken können. Auch der zwischen der Eintrittsdichtungszunge 6a und den Kanälen 8 liegende Bereich der Aussparung 16 wird dann derart minimiert, dass die Eintrittsdichtungszungen 6a die Kanäle 8 axial abdecken. Ein Medium lässt sich der Membranelektrodenanordnung 2 lateral und in Stapelrichtung unterhalb der ersten Eintrittsdichtungszunge 8a zuführen. (Teil-)Verbrauchtes Medium kann dann lateral und in Stapelrichtung unterhalb der ersten Austrittsdichtungszunge 8b die Einheitszelle 11 des Brennstoffzellenstapels 12 verlassen.

In Figur 8 ist auf die erste Eintrittsdichtungszunge 6a und auf die erste Austrittsdichtungszunge 6b eine Verbindungsschicht 20 aufgebracht, die als weitere Fügeschicht zu verstehen ist. Die Verbundschicht 15 und die Verbindungsschicht 20 gewährleisten eine sichere Verbindung einer ersten Bipolarplatte 7a in Stapelrichtung mit einer zweiten Bipolarplatte 7b. Die Verbundschicht 15 bildet Überlappungen 21 mit der Verbindungsschicht 20 aus, derart, dass die beiden Schichten in Stapelrichtung eine Kontaktfläche besitzen. Dadurch wird eine Dichtungsfunktion gewährleistet. Die Überlappungen 21 sind Figur 9, dem Schnitt IX-IX aus Figur 8, näher zu entnehmen. Auch hier ist ein unverpresster Zustand gezeigt, der nicht maßstabsgetreu ist, der aber die gestapelte Anordnung der einzelnen Lagen verdeutlichen soll.

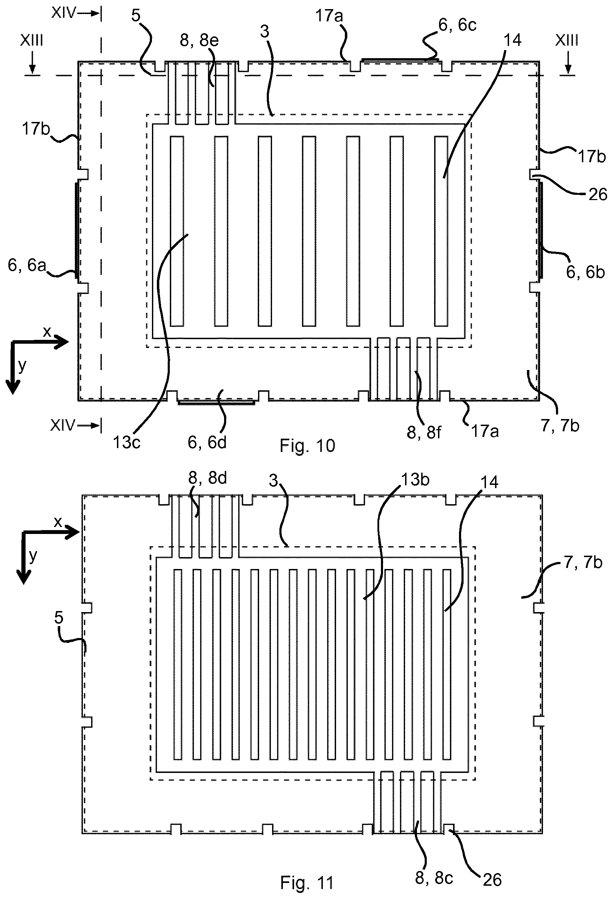

Auf die Verbundschicht 15 und die mit dieser verbundenen Verbindungsschicht 20 kann nun eine zweite Bipolarplatte 7b zur Vervollständigung der Einheitszelle 11 aufgebracht werden. Dies ist Figur 10 zu entnehmen. Die erste Bipolarplatte 7a und die zweite Bipolarplatte 7b können durch die Fügeschichten miteinander verfügt werden, derart, dass eine höchstens mit geringen Überständen versehene Einheitszelle aus erster Bipolarplatte 7a, Brennstoffzellenanordnung und zweiter Bipolarplatte 7b entsteht. Vorzugsweise sind aber die einzelnen Lagen der Einheitszelle 11 kantenfrei oder versatzfrei in Stapelrichtung verbunden.

Wie die erste Bipolarplatte 7a besitzt auch die in Figur 10 und Figur 11 gezeigte zweite Bipolarplatte 7b auf ihrer der Membranelektrodenanordnung 2 abgewandten Seite ein Flussfeld 13c zur Führung von einem Kühlmedium. Dieses Flussfeld 13c befindet sich im Wesentlichen im aktiven Bereich 3. Es ist strömungsverbunden mit Kühlmitteleintrittskanälen 8e und mit Kühlmittelaustrittskanälen 8f. Zudem umfasst auch die zweite Bipolarplatte 7b ausgesparte Bereiche, die die Schenkelaufnahmen 26 bilden.

Auf ihrer der Membranelektrodenanordnung 2 zugewandten Seite weist die zweite Bipolarplatte 7b aber einen oder mehrere zweite Medieneintrittskanäle 8c und einen oder mehrere zweite Medienaustrittskanäle 8d auf (Fig. 11). Außerdem umfasst sie ein mit dem zweiten Medieneintrittskanal 8c und dem zweiten Medienaustrittskanal 8d strömungsverbundenes zweites Flussfeld 13b, über welches eines der Reaktionsmedien der Membranelektrodenanordnung 2 zugeführt werden kann.

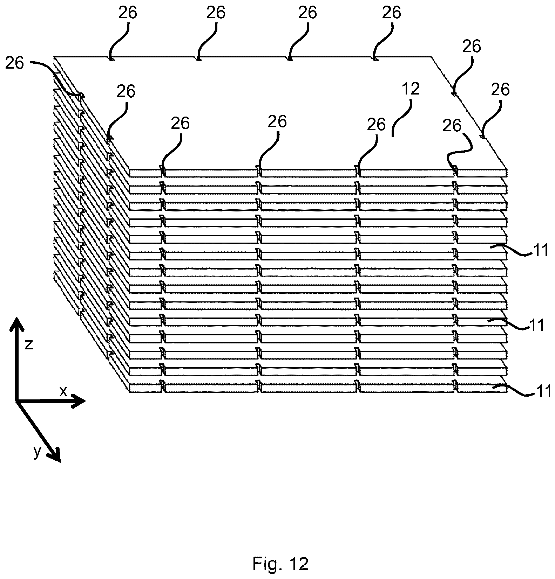

In Figur 12 ist ein aus mehreren Einheitszellen 11 gebildeter Brennstoffzellenstapel 12 dargestellt. Dieser Brennstoffzellenstapel 12 weist den Vorteil auf, dass die Bipolarplatte 7 gegenüber bekannten Bipolarplatten mit geringeren Abmessungen ausgestaltet sein können, so dass die Herstellkosten des Brennstoffzellenstapels 12 reduziert sind. Vorliegend sind die Bipolarplatten 7 im Grundsatz rechteckig geformt, wobei die vorliegende Erfindung nicht auf eine rechteckige Form der Bipolarplatten 7 angewiesen ist, sondern auch ohne Einschränkung in beliebige Formen mit zum Beispiel runden oder geschwungenen Linienführungen anwendbar ist. Wichtig ist in diesem Zusammenhang jedenfalls, dass an dem Brennstoffzellenstapel 12 eine Mehrzahl an parallel zur Stapelrichtung ausgebildeten Schenkelaufnahmen 26 vorhanden sind, an denen die Medienführungen 22 fixiert werden können.

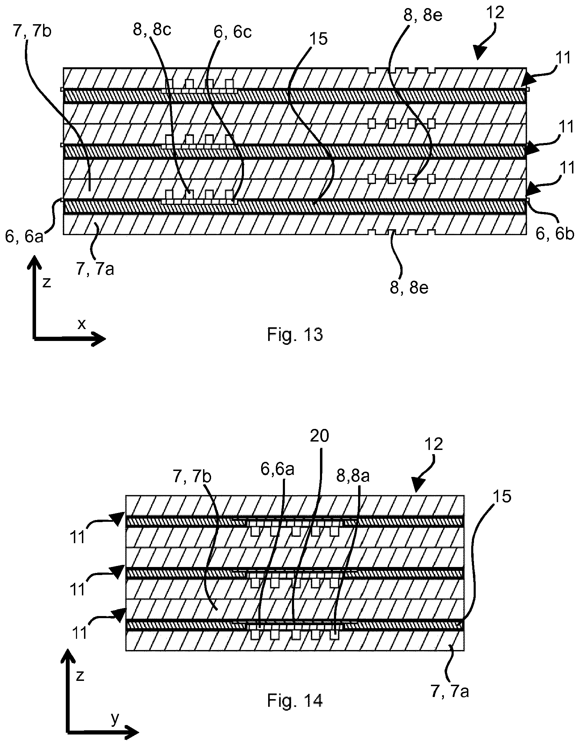

Figur 13 zeigt eine exemplarische Schnittansicht entlang des Schnittes XIII-XIII aus Figur 10 durch einen Brennstoffzellenstapel 12. Es ist zu erkennen, dass die Verbundschicht 15 nach dem Verfüge- oder Heißpressvorgang sowohl die erste Bipolarplatte 7a als auch die zweite Bipolarplatte 7b berührt oder kontaktiert, wobei die Bipolarplatten 7 über die Verbundschicht 15 miteinander verbunden oder miteinander gefügt sind. Es ist zudem zu erkennen, dass die zweiten Medieneintrittskanäle 8c durch die sich in den oder über den Randbereich 5 erstreckenden zweiten Eintrittsdichtungszungen 6c axial gasdicht abgedeckt sind. Entsprechend verhält es sich an der gegenüberliegenden Seite an der zweiten Bipolarplatte 7b, wo sich in den oder über den Randbereich 5 erstreckende zweite Austrittsdichtungszungen 6d vorgesehen sind zur axialen gasdichten Abdeckung der zweiten Medienaustrittskanäle 8c. In Figur 13 ist außerdem zu erkennen, dass ein zweites Reaktionsmedium lateral und in Stapelrichtung oberhalb der Dichtungsstruktur 4 an die Membranelektrodenanordnung 2 geführt wird. Entsprechend wird auch in Stapelrichtung oberhalb der Dichtungsstruktur 4 das (teil-)verbrauchte zweite Reaktionsmedium lateral wieder aus den Einheitszellen 11 bzw. aus dem Brennstoffzellenstapel 12 herausgeführt.

Die zweite Bipolarplatte 7b einer ersten Einheitszelle 11 bildet mit einer ersten Bipolarplatte 7a einer weiteren Einheitszelle 11 dann den vollständigen Kanalquerschnitt für den Durchtritt des Kühlungsmediums. Mit anderen Worten bilden diese dann auch die Kühlmitteleintrittskanäle 8e und die Kühlmittelaustrittskanäle 8f aus. Die zweite Bipolarplatte 7b der ersten Einheitszelle 11 und die erste Bipolarplatte 7a der weiteren Einheitszelle 11 können dabei ebenfalls mit einem Fügemittel oder Fügemedium miteinander verfügt sein. Alternativ ist eine generativ gefertigte einteilige Ausgestaltung der benachbarten Bipolarplatten 7 möglich.

Figur 14 zeigt eine exemplarische Schnittansicht entlang des Schnittes XIV-XIV aus Figur 10 durch einen Brennstoffzellenstapel 12. Es ist zu erkennen, dass in Stapelrichtung die zweite Bipolarplatte 7a auf die Verbindungsschicht 20 und die Verbundschicht 15 aufgebracht ist. Es ist außerdem zu erkennen, dass ein erstes Reaktionsmedium in Stapelrichtung unterhalb der Dichtungsstruktur 4 an die Membranelektrodenanordnung 2 geführt wird. Die ersten Medieneintrittskanäle 8a sind hierbei durch die ersten Eintrittsdichtungszungen 6a axial gasdicht abgedeckt. Die Zufuhr eines ersten Reaktionsmediums erfolgt seitlich oder in lateraler Richtung bezüglich der Stapelrichtung. Entsprechend wird auch in Stapelrichtung unterhalb der Dichtungsstruktur 4 das (teil-)verbrauchte erste Reaktionsmedium wieder aus der Einheitszelle 11 bzw. aus dem Brennstoffzellenstapel 12 lateral oder seitlich herausgeführt.

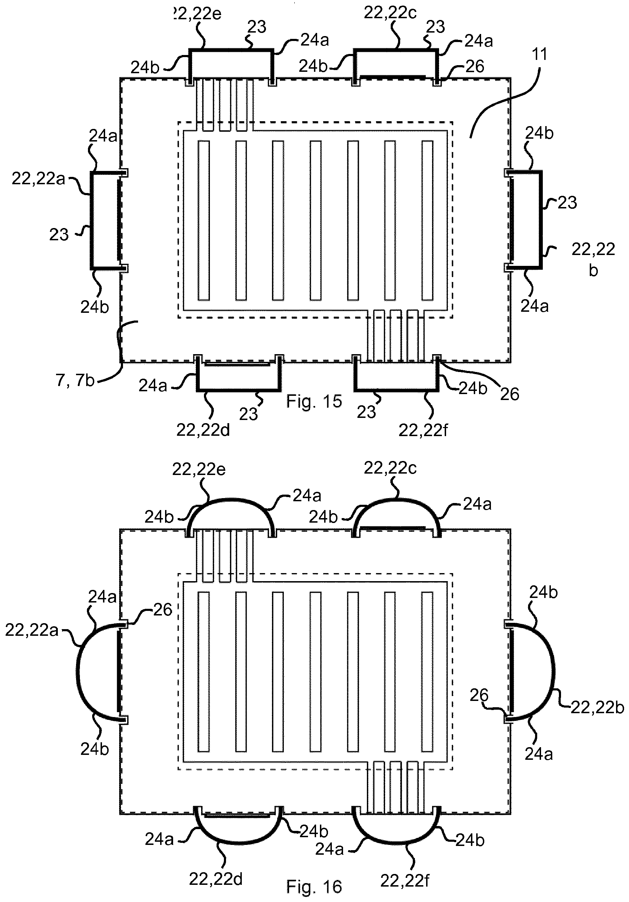

In Figur 15 ist eine Schnittansicht durch die Brennstoffzellenvorrichtung 1 nach Figur 1b gezeigt, die im Wesentlichen der Draufsicht auf die Einheitszellen 11 nach Figur 10 entspricht. Es ist zu erkennen, dass nun jedoch die Medienführungen 22 mit ihren Führungsschenkeln 24a, 24b in die Schenkelaufnahmen 26 eingesetzt sind.

Die hier gezeigten Medienführungen 22 weisen einen Führungssteg 23 auf, der die beiden endständigen Führungsschenkel 24a, 24b miteinander verbindet. Jeder der Führungsschenkel 24a, 24b ist in einer der Schenkelaufnahmen 26, die sich parallel zur Stapelrichtung erstrecken, des Brennstoffzellenstapels 12 aufgenommen. Die offene Seite der Medienführungen 22 weist zum Brennstoffzellenstapel 12, so dass ein durch sie strömendes Medium seitlich in die Einheitszellen 12 gelangen kann. Die Medienführungen 22 sind im Querschnitt im Wesentlichen rechteckig gebildet, eine andere Formgebung ist aber möglich. Vorzugsweise sind die Medienkanäle 22 aus einem, insbesondere formstabilen, Kunststoff gebildet.

Figur 16 zeigt eine andere Formgebung der Medienführungen 22, wobei hier ein Querschnitt durch den Brennstoffzellenstapel 12 der Figur 1b zu sehen ist. Hierbei sind die Medienführungen 22 halbrund oder C-förmig gebildet, so dass die Führungsschenkel 24a, 24b unmittelbar miteinander verbunden sind unter Verzicht auf einen Führungssteg 23.

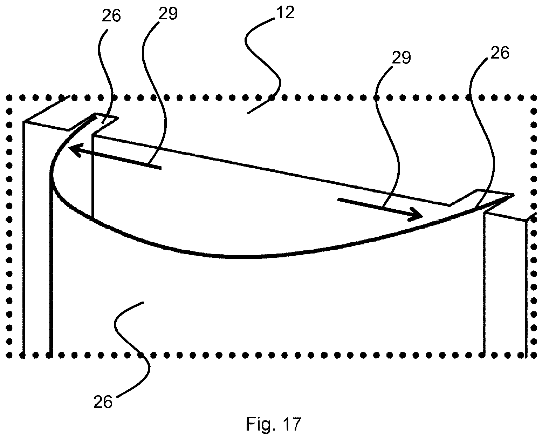

Aus der Detailansicht nach Figur 17 lässt sich entnehmen, dass vorliegend die Medienführungen 22 elastisch nachgiebig gebildet sind. Dadurch sind die Führungsschenkel 24a, 24b in einer - insbesondere nach außen gerichteten - Vorspannung in den Schenkelaufnahmen 26 des Brennstoffzellenstapels 12 gehalten. Es ist also eine Rückstellkraft (angedeutet durch die Kraftpfeile 29) wirksam und die Medienführungen 22 sind aufgrund dieser Rückstellkraft innerhalb der Schenkelaufnahmen 26 gesichert. Außerdem erfolgt eine zusätzliche Sicherung der Führungsschenkel 24a, 24b aufgrund des Druckes eines in den Medienführungen 22 strömenden Mediums. Auch dieses Medium bewirkt eine nach außen gerichtete Kraft, die - summiert mit der Rückstellkraft - zu einer noch festeren Verbindung zwischen den Medienführungen 22 und dem Brennstoffzellenstapel 12 führen.

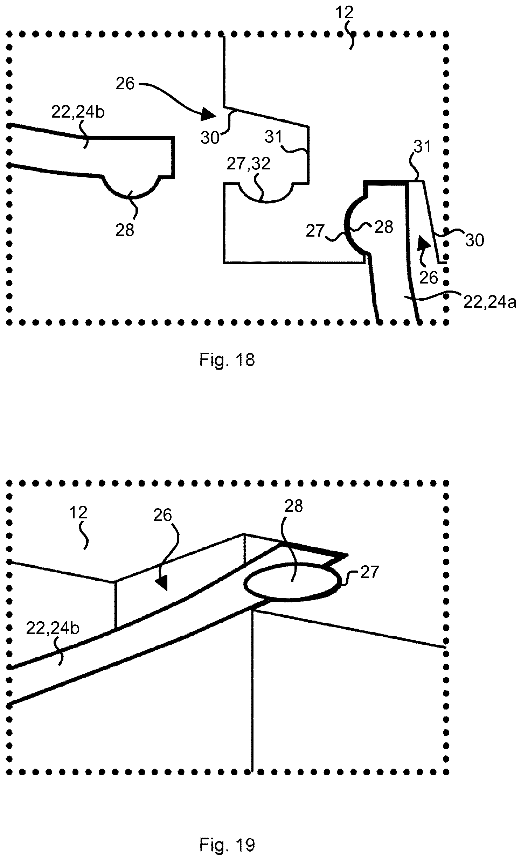

Alternativ oder ergänzend können die Schenkelaufnahmen 26 auch gemäß dem in Figur 18 dargestellten Detail gebildet sein. Hierbei weisen die Schenkelaufnahmen 26 eine Hinterschneidung 27 auf, in die ein am Führungsschenkel 24a, 24b ausgebildetes oder angeordnetes Führungsglied 28 aufnehmbar ist. Innerhalb der Schenkelaufnahme 26 ist - der Hinterschneidung 27 gegenüberliegend - eine geneigt verlaufende Einführfläche 30 ausgebildet, die das Einführen des Führungsschenkels 24a, 24b in die Schenkelaufnahme 26 erleichtert. Die Einführfläche 30 ist sowohl bezüglich der langen Kante 17a als auch bezüglich der kurzen Kante 17b der Bipolarplatte 7 geneigt angeordnet. Die Einführfläche 30 geht in eine parallel zur Plattenkante ausgerichtete (laterale) Kontaktfläche 31 über, die die Eindringtiefe der Führungsschenkel 24a, 24b in die Schenkelaufnahme 26 vorgibt und/oder begrenzt. Ausgehend von der Kontaktfläche 31 geht die Schenkelaufnahme 26 dann in eine nutförmige Kontaktfläche 32 über, die vorzugsweise die Hinterschneidung 27 ausbildet.

Während beim Beispiel nach Figur 17 das Führungsglied 28 einstückig mit dem Führungsschenkel 24a, 24b gebildet ist, ist beim Beispiel nach Figur 19 das Führungsglied 28 aus einem anderen Material als der Führungsschenkel 24a, 24b geformt. Dieses andere Material kann beispielsweise ein (zusätzliches) Dichtungsmaterial sein, um die Dichtheit des Brennstoffzellenstapels 12 zusätzlich zu gewährleisten.

Die vorliegende Gestaltung der Brennstoffzellenvorrichtung 1 erlaubt eine positionsgenaue Anordnung der Medienführungen 22 am Brennstoffzellenstapel 12. Die Fixierung der Führungsschenkel 24a, 24b innerhalb der Schenkelaufnahmen 26 des Brennstoffzellenstapels 12 mittels der kraft- und/oder form- und/oder stoffschlüssigen Koppelung hält einer großen Kraft, die vom Brennstoffzellenstapel 12 weggerichtet ist, stand, welche durch den Druck der in den Medienführungen 22 strömenden Medien ausgeübt wird. Die Medienführungen 22 zeichnen sich durch ihre hervorragende selbstsichernde Funktion aus.

Aufgrund der vorliegenden Gestaltung sichert die nach außen gerichtete Kraft die Medienführungen 22 zusätzlich an dem Brennstoffzellenstapel 12. Das bedeutet auch, je größer der durch die Medien erzeugte Druck innerhalb der Medienführungen 22 ist, desto fester wirkt auch die Verbindung zwischen dem Führungsschenkel 24a, 24b innerhalb der Schenkelaufnahme 26 des Brennstoffzellenstapels 12.

### BEZUGSZEICHENLISTE

- 1: Brennstoffzellenvorrichtung
- 2: Membranelektrodenanordnung (MEA)
- 3: aktiver Bereich
- 4: Dichtungsstruktur
- 5: Randbereich
- 6: Dichtungszunge
- 6a: erste Eintrittsdichtungszunge
- 6b: erste Austrittsdichtungszunge
- 6c: zweite Eintrittsdichtungszunge
- 6d: zweite Austrittsdichtungszunge
- 7: Bipolarplatte
- 7a: erste Bipolarplatte
- 7b: zweite Bipolarplatte
- 8: Medienkanal
- 8a: erster Medieneintrittskanal
- 8b: erster Medienaustrittskanal
- 8c: zweiter Medieneintrittskanal
- 8d: zweiter Medienaustrittskanal
- 8e: Kühlmitteleintrittskanal
- 8f: Kühlmittelaustrittskanal
- 9a: kurze Kante der Membranelektrodenanordnung
- 9b: lange Kante der Membranelektrodenanordnung
- 10: Dichtungsring
- 11: Einheitszelle
- 12: Brennstoffzellenstapel
- 13a: erstes Flussfeld
- 13b: zweites Flussfeld
- 13c: Flussfeld (Kühlmedium)
- 14: Wand
- 15: Verbundschicht
- 16: Aussparung
- 17a: lange Kante der Bipolarplatte
- 17b: kurze Kante der Bipolarplatte
- 18: Kontaktlinien
- 19: Überstand
- 20: Verbindungsschicht
- 21: Überlappungen
- 22: Medienführung
- 22a: erste Medienzuführung
- 22b: erste Medienabführung
- 22c: zweite Medienzuführung
- 22d: zweite Medienabführung
- 22e: Kühlmittelzuführung
- 22f: Kühlmittelabführung
- 23: Führungssteg
- 24a: Führungsschenkel (links)
- 24b: Führungsschenkel (rechts)
- 26: Schenkelaufnahme
- 27: Hinterschneidung
- 28: Führungsglied
- 29: Kraftpfeil
- 30: Einführfläche
- 31: (laterale) Kontaktfläche
- 32: (nutförmige) Kontaktfläche

## Patentansprüche

1. Brennstoffzellenvorrichtung (1) mit einem Brennstoffzellenstapel (12), der aus einer Mehrzahl von in einer Stapelrichtung übereinander gestapelten Einheitszellen (11) gebildet ist, die jeweils einen oder mehrere Medienkanäle (8) und eine Membranelektrodenanordnung (2) aufweisen, welche eine Kathode, eine Anode und eine zwischen der Kathode und der Anode angeordnete Membran umfasst, sowie mit einer im Wesentlichen parallel zur Stapelrichtung verlaufenden Medienführung (22), die derart mit dem Brennstoffzellenstapel (12) verbindbar oder verbunden ist, um ein Medium im Wesentlichen lateral zur Stapelrichtung in die oder aus den Medienkanälen (8) der Einheitszellen (11) des Brennstoffzellenstapels (12) zu führen, und die zumindest mittelbar miteinander verbundene Führungsschenkel (24a, 24b) umfasst, welche mit dem Brennstoffzellenstapel (12) verbindbar oder verbunden sind, wobei die Führungsschenkel (24a, 24b) der Medienführung (22) in im Wesentlichen parallel zur Stapelrichtung verlaufenden Schenkelaufnahmen (26) des Brennstoffzellenstapels (12) eingesetzt sind, **dadurch gekennzeichnet, dass** die Medienführung (22) elastisch nachgiebig gebildet ist, derart, dass die Führungsschenkel (24a, 24b) unter einer Vorspannung in den Schenkelaufnahmen (26) gehalten sind.

2. Brennstoffzellenvorrichtung (1) nach Anspruch 1, **dadurch gekennzeichnet, dass** die Schenkelaufnahmen (26) des Brennstoffzellenstapels (12) als im Wesentlichen parallel zur Stapelrichtung verlaufende Nuten gebildet sind.

3. Brennstoffzellenvorrichtung (1) nach Anspruch 1 oder 2, **dadurch gekennzeichnet, dass** die Schenkelaufnahmen (26) eine Hinterschneidung (27) aufweisen, die derart ausgebildet ist, dass darin ein an dem einen und/oder an dem anderen Führungsschenkel (24a, 24b) ausgebildetes oder angeordnetes Führungsglied (28) aufnehmbar ist.

4. Brennstoffzellenvorrichtung (1) nach Anspruch 3, **dadurch gekennzeichnet, dass** das Führungsglied (28) formschlüssig in der Hinterschneidung (27) aufnehmbar ist.

5. Brennstoffzellenvorrichtung (1) nach Anspruch 3 oder 4, **dadurch gekennzeichnet, dass** das Führungsglied (28) aus einem anderen Material als die Führungsschenkel (24a, 24b) gebildet ist.

6. Brennstoffzellenvorrichtung (1) nach Anspruch 5, **dadurch gekennzeichnet, dass** das Führungsglied (28) aus einem Dichtungsmaterial gebildet ist.

7. Brennstoffzellenvorrichtung (1) nach einem der Ansprüche 1 bis 6, **dadurch gekennzeichnet, dass** die Führungsschenkel (24a, 24b) mittelbar über einen Führungssteg (23) miteinander verbunden sind.

8. Brennstoffzellenvorrichtung (1) nach einem der Ansprüche 1 bis 6, **dadurch gekennzeichnet, dass** die Führungsschenkel (24a, 24b) unmittelbar miteinander verbunden sind.

9. Brennstoffzellenvorrichtung (1) nach einem der Ansprüche 1 bis 8, **dadurch gekennzeichnet, dass** mehrere der Medienführungen (22) vorgesehen sind, die als eine erste Medienzuführung (22a) zur Zuführung eines ersten Reaktionsmediums und als eine erste Medienabführung (22b) zur Abführung des zumindest teilverbrauchten ersten Reaktionsmediums, und die als eine zweite Medienzuführung (22c) zur Zuführung eines zweiten Reaktionsmediums und als eine zweite Medienabführung (22d) zur Abführung des zumindest teilverbrauchten zweiten Reaktionsmediums gebildet sind.

## Claims

1. Fuel cell device (1) with a fuel cell stack (12), which is formed by a plurality of unit cells (11) stacked on top of one another in a stacking direction, which each have one or more media channels (8) and a membrane electrode assembly (2), which comprises a cathode, an anode and a membrane arranged between the cathode and the anode, and with a media duct (22) running substantially parallel to the stacking direction, which is connectable or connected to the fuel cell stack (12) in order to guide a medium substantially laterally to the stacking direction into or out of the media channels (8) of the unit cells (11) of the fuel cell stack (12), and which comprises at least indirectly connected duct flanges (24a, 24b), which are connectable or connected to the fuel cell stack (12), wherein the duct flanges (24a, 24b) of the media duct (22) are inserted into flange holders (26) of the fuel cell stack (12) running substantially parallel to the stacking direction, **characterised in that** the media duct (22) is designed to be elastically flexible, such that the duct flanges (24a, 24b) are held under pretensioning in the flange holders (26).

2. Fuel cell device (1) according to claim 1, **characterised in that** the flange holders (26) of the fuel cell stack (12) are formed as grooves that run substantially parallel to the stacking direction.

3. Fuel cell device (1) according to claim 1 or 2, **characterised in that** the flange holders (26) have an undercut (27) which is configured such that a guiding element (28) can be mounted therein which is formed or arranged on one and/or the other duct flange (24a, 24b).

4. Fuel cell device (1) according to claim 3, **characterised in that** the guiding element (28) can be received in a form-fitting manner in the undercut (27).

5. Fuel cell device (1) according to claim 3 or 4, **characterised in that** the guiding element (28) is formed from a different material than the duct flanges (24a, 24b).

6. Fuel cell device (1) according to claim 5, **characterised in that** the guiding element (28) is formed from a sealing material.

7. Fuel cell device (1) according to any of claims 1 to 6, **characterised in that** the duct flanges (24a, 24b) are connected to one another indirectly via a guiding bridge (23).

8. Fuel cell device (1) according to any of claims 1 to 6, **characterised in that** the duct flanges (24a, 24b) are connected directly to one another.

9. Fuel cell device (1) according to any of claims 1 to 8, **characterised in that** a plurality of media ducts (22) are provided, which are formed as a first media supply (22a) for supplying a first reaction medium and as a first media outlet (22b) for discharging the at least partly used first reaction medium, and which are formed as a second media supply (22c) for supplying a second reaction medium and as a second media outlet (22d) for discharging the at least partly used second reaction medium.

## Revendications

1. Dispositif à piles à combustible (1) avec un empilement de piles à combustible (12), qui est formé à partir d'une multitude de piles individuelles (11) empilées les unes pardessus les autres dans un sens d'empilement, qui présentent respectivement un ou plusieurs canaux à fluide (8) et un ensemble formant électrode de membrane (2), lequel comprend une cathode, une anode et une membrane disposée entre la cathode et l'anode, ainsi qu'avec un guide de fluide (22) s'étendant de manière sensiblement parallèle par rapport au sens d'empilement, qui peut être relié ou est relié à l'empilement de piles à combustible (12) de manière à guider un fluide de manière sensiblement latérale par rapport au sens d'empilement dans les ou hors des canaux à fluide (8) des piles individuelles (11) de l'empilement de piles à combustible (12) et qui comprend des branches de guidage (24a, 24b) reliées au moins indirectement les unes aux autres, lesquelles peuvent être reliées ou sont reliées à l'empilement de piles à combustible (12), dans lequel les branches de guidage (24a, 24b) du guide de fluide (22) sont insérées dans des logements de branche (26), s'étendant de manière sensiblement parallèle par rapport au sens d'empilement, de l'empilement de piles à combustible (12), **caractérisé en ce que** le guide de fluide (22) est formé de manière élastiquement souple de telle manière que les branches de guidage (24a, 24b) sont maintenues sous l'effet d'une précontrainte dans les logements de branche (26).

2. Dispositif à piles à combustible (1) selon la revendication 1, **caractérisé en ce que** les logements de branche (26) de l'empilement de piles à combustible (12) sont formés en tant que rainures s'étendant de manière sensiblement parallèle par rapport au sens d'empilement.

3. Dispositif à piles à combustible (1) selon la revendication 1 ou 2, **caractérisé en ce que** les logements de branche (26) présentent une contre-dépouille (27) qui est réalisée de telle manière qu'un organe de guidage (28) réalisé ou disposé sur une et/ou sur l'autre branche de guidage (24a, 24b) peut y être logé.

4. Dispositif à piles à combustible (1) selon la revendication 3, **caractérisé en ce que** l'organe de guidage (28) peut être logé par complémentarité de forme dans la contre-dépouille (27).

5. Dispositif à piles à combustible (1) selon la revendication 3 ou 4, **caractérisé en ce que** l'organe de guidage (28) est formé à partir d'un matériau autre que les branches de guidage (24a, 24b).

6. Dispositif à piles à combustible (1) selon la revendication 5, **caractérisé en ce que** l'organe de guidage (28) est formé à partir d'un matériau d'étanchéité.

7. Dispositif à piles à combustible (1) selon l'une quelconque des revendications 1 à 6, **caractérisé en ce que** les branches de guidage (24a, 24b) sont reliées les unes aux autres indirectement par l'intermédiaire d'une entretoise de guidage (23).

8. Dispositif à piles à combustible (1) selon l'une quelconque des revendications 1 à 6, **caractérisé en ce que** les branches de guidage (24a, 24b) sont reliées les unes aux autres directement.

9. Dispositif à piles à combustible (1) selon l'une quelconque des revendications 1 à 8, **caractérisé en ce que** sont prévus plusieurs des guides de fluide (22), qui sont formés en tant qu'une première amenée de fluide (22a) pour amener un premier fluide de réaction et en tant qu'une première évacuation de fluide (22b) pour évacuer le premier fluide de réaction au moins en partie consommé et qui sont formés en tant qu'une deuxième amenée de fluide (22c) pour amener un deuxième fluide de réaction et en tant qu'une deuxième évacuation de fluide (22d) pour évacuer le deuxième milieu de réaction au moins en partie consommé.
